# EUROPÄISCHE PATENTSCHRIFT

(11) **EP 1 469 282 B1**
(45) Veröffentlichungstag und Bekanntmachung des Hinweises auf die Patenterteilung: **04.08.2010**
(21) Anmeldenummer: 04101568.6
(22) Anmeldetag: 16.04.2004
(51) Int. Cl.: G01C 15/00

(54) **Vorrichtung zum Erzeugen und Projizieren von Lichtmarken**
Device for producing and projecting light marks
Dipositif pour produire et projeter des marques lumineuses

(30) Priorität: 17.04.2003 DE 10317958
(43) Veröffentlichungstag der Anmeldung: 20.10.2004
(73) Patentinhaber: HILTI Aktiengesellschaft, 9494 Schaan (LI)
(72) Erfinder: Dang, Lieu-Kim, 9494, Schaan (LI)
(74) Vertreter: Wildi, Roland

(56) Entgegenhaltungen:
- DE-A1- 10 116 563
- DE-U1- 9 307 359
- US-A- 5 838 431

## Beschreibung

Die Erfindung betrifft eine Vorrichtung zum Erzeugen und Projizieren von Lichtmarken.

Es ist bekannt, bei Herstellungsverfahren, konstruktiven Maßnahmen oder auch bei Bauvorhaben Vorrichtungen einzusetzen, durch welche Lichtmarken in geeigneter Weise erzeugt und projiziert werden können. Diese Lichtmarken werden verwendet, um bei den oben erwähnten Vorgängen absolute oder relative Positionen, Orientierungen und dergleichen von Gegenständen, Räumlichkeiten oder Örtlichkeiten zu definieren und einem Benutzer anzuzeigen.

Bekannte Vorrichtungen zum Erzeugen und Projizieren von Lichtmarken weisen dazu eine Lichtquelleneinrichtung, eine Kollimationsoptik sowie eine Projektionsoptik auf. Die Lichtquelleneinrichtung dient zur Erzeugung und Aussendung eines primären Lichtstrahlenbündels. Die Kollimationsoptik ist zum Empfang des primären Lichtstrahlenbündels und zu dessen Kollimation, Parallelisierung und dabei Aufweitung in ein sekundäres Lichtstrahlenbündel sowie zum gerichteten Aussenden des sekundären Lichtstrahlenbündels ausgebildet und vorgesehen. Die Projektionsoptik dient dem Empfang zumindest eines Teils des sekundären Lichtstrahlenbündels und der Wandlung des sekundären Lichtstrahlenbündels in zumindest ein für mindestens eine Lichtmarke geeignetes tertiäres Lichtstrahlenbündel oder Markierungsstrahlenbündel und deren Ausgabe und dabei zur Projektion mindestens einer Lichtmarke.

Dabei ist nachteilig, dass nur durch einen erheblichen Aufwand simultan sowohl Linienmarkierungen, also Lichtmarken in Form einer Linie, als auch Punkt- oder Fleckmarkierungen, also Lichtmarken in Form eines Punkts oder Flecks, erzeugt und projiziert werden können. In der Regel sind dazu mehrere voneinander unabhängig betreibbare und doch aufeinander zu justierende und abzustimmende Projektionseinheiten mit entsprechenden Optiken notwendig.

Die Druckschrift US 5,838,431 A betrifft eine Lasermarkierungseinrichtung, bei welcher mittels Projektionslinsen, die teilweise von einem Randbereich eines Laserstrahls bestrahlt werden, eine Punkt- und eine Linienmarke erzeugt werden, wobei die Linienmarke durch das teilweise Durchstrahlen der Projektionslinse mit dem Randstrahlenbündel des Laserstrahls und die Punktmarke durch den an der Projektionslinse vorbei laufenden Anteil des Laserstrahls, insbesondere den Zentralbereich davon, erzeugt werden.

Die Druckschrift DE 101 16 563 A1 betrifft einen Mehrachslaserstrahler mit optischem Strahlteiler, bei welchem mehrere Punktmarken durch Bestrahlen eines mit Spiegeln versehenen Strahlteilers erzeugt werden.

Die Druckschrift DE 93 07 359.3 U1 betrifft eine Vorrichtung zum Erzeugen von Markierungskreuzen mit mehreren Lichtmarken in Form von Linien, die durch gleichzeitiges Bestrahlen zueinander senkrecht angeordneter Projektionslinsen erzeugt werden.

Der Erfindung liegt die Aufgabe zugrunde, eine Vorrichtung zum Erzeugen und Projizieren von Lichtmarken der eingangs erwähnten Art derart fortzubilden, dass auf besonders einfache und gleichwohl zuverlässige Art und Weise simultan gut sichtbare Punktmarken und Linienmarken mit besonders geringem optischem Aufwand und unter weitestgehender Vermeidung von Justagevorgängen erzeugbar und projizierbar sind.

Die Aufgabe wird bei einer Vorrichtung zum Erzeugen und Projizieren von Lichtmarken der eingangs erwähnten Art erfindungsgemäß mit den kennzeichnenden Merkmalen des Anspruchs 1 gelöst. Vorteilhafte Weiterbildungen der erfindungsgemäßen Vorrichtung zum Erzeugen und Projizieren von Lichtmarken sind Gegenstand der abhängigen Unteransprüche.

Die erfindungsgemäße Vorrichtung zum Erzeugen und Projizieren von Lichtmarken ist allgemein dadurch gekennzeichnet, dass die Projektionsoptik mit dem sekundären Lichtstrahlenbündel oder einem Teil davon derart beaufschlagbar ist, dass die Zylinderlinse in dem Zylinderabschnittsbereich, in dem sie von einem Zentralstrahlenbündel des sekundären Lichtstrahlenbündels vollständig durchstrahlbar ist, und dass mindestens ein Randstrahlenbündel des sekundären Lichtstrahlenbündels benachbart zum Zentralstrahlenbündel des sekundären Lichtstrahlenbündels unmittelbar am Rand oder Mantel des durchstrahlten Zylinderabschnittsbereichs der Zylinderlinse vorbei aussendbar ist, dass das Zentralstrahlenbündel des sekundären Lichtstrahlenbündels durch Wechselwirkung mit der Zylinderlinse zerstreubar und als Teil des tertiären Lichtstrahlenbündels als Linienmarkenstrahlenbündel für eine Lichtmarke im Wesentlichen in Form einer Linie projizierbar ist und dass das mindestens eine Randstrahlenbündel des sekundären Lichtstrahlenbündels als Teil des tertiären Lichtstrahlenbündels als Punktmarkenstrahlenbündel für eine Lichtmarke im Wesentlichen in Form eines Punkts oder eines Flecks projizierbar ist.

Auf diese Weise werden unter Verwendung einer einzigen Lichtquelleneinrichtung mit einer einzigen Projektionsoptik mit oder in Form einer Zylinderlinse simultan sowohl eine Lichtmarke in Form einer Linie, nämlich eine Linienmarke, als auch eine Lichtmarke in Form eines oder zweier Punkte, nämlich eine Punktmarke, erzeugbar und projizierbar. Aufgrund der fixierten Geometrie durch Verwendung einer einzigen Zylinderlinse haben die Linienmarke und die Punktmarke oder die Punktmarken zueinander eine vorgegebene räumliche Beziehung, ohne dass es dazu einer Justage bedarf. Weiterhin ist bei der erfindungsgemäßen Vorrichtung die Anzahl optischer Komponenten gegenüber herkömmlichen Vorgehensweisen reduziert, so dass sich hier ein verringerter Wartungsaufwand und auch reduzierte Kosten bei der Herstellung und Instandhaltung einer derartigen Vorrichtung ergeben.

Ein Aspekt der Erfindung ist somit, eine in der Projektionsoptik vorgesehen Zylinderlinse mit einem Lichtstrahlenbündel, welches sich aus einem primären Lichtstrahlenbündel durch Kollimation, Parallelisierung und Aufweitung als sekundäres Lichtstrahlenbündel ergibt, derart zu bestrahlen und mit diesem zu beaufschlagen, dass ein Teil des sekundären Lichtstrahlenbündels, nämlich ein Zentralstrahlenbündel einen Teil der Zylinderlinse, nämlich einen Zylinderabschnittsbereich davon oder ein Zylindersegment davon, im Wesentlichen vollständig durchstrahlt und dass ein anderer Teil des sekundären Lichtstrahlenbündels, nämlich mindestens ein Randstrahlenbündel unmittelbar am Rand oder Mantel der Zylinderlinse, nämlich des Zylinderabschnittsbereichs, welcher im Wesentlichen vollständig durchstrahlt wird, vorbeiläuft oder vorbei aussendbar ist. Das Zentralstrahlenbündel wird durch Wechselwirkung oder Brechung mit dem durchstrahlten Zylinderabschnittsbereich zerstreut oder dispergiert, so dass sich nach Durchgang durch den Zylinderabschnittsbereich oder durch das Zylindersegment in der Anwendung oder im Betrieb auf einer entfernten Projektionsfläche eine Lichtmarke in Form einer Linie oder eine Linienmarke ergibt. Die Randstrahlenbündel oder das Randstrahlenbündel verlaufen oder verläuft außen am Mantel an der Zylinderlinse im Bereich des Zylinderabschnitts vorbei und bildet somit im Betrieb und in der Anwendung auf einer dann vorgesehenen Projektionsfläche eine entsprechende Punktmarke, also eine Lichtmarke in Form eines Punkts oder Flecks. Durch eine entsprechende Ausgestaltung können die Punktmarke und die Linienmarke in eine bestimmte räumliche Relation zueinander gesetzt werden, so dass sich z. B. auf der Linienmarke durch die Punktmarke ein bestimmter räumlicher Referenzpunkt definieren und darstellen lässt.

Dies alles ist beim Stand der Technik wenn überhaupt nur mit einem erheblichen Mehraufwand mit einer Mehrzahl von Projektionssystemen, nämlich für jede Lichtmarke oder für jeden Lichtmarkentyp ein separates, möglich.

Besonders vorteilhafte Projektions- und Abbildungsverhältnisse ergeben sich dann, wenn die Lichtquelleneinrichtung gemäß einer bevorzugten Ausführungsform der erfindungsgemäßen Vorrichtung zur Erzeugung und Aussendung im Wesentlichen kohärenten und/oder monochromatischen Lichts für das primäre Lichtstrahlenbündel ausgelegt ist. Dann nämlich stellen sich besonders scharfe Abbildungsverhältnisse im Betrieb ein.

Unter bestimmten symmetrischen Verhältnissen ist es auch dann möglich, bei der Verwendung zweier Randstrahlenbündel, welche im Betrieb an gegenüberliegenden Randbereichen des Zylinderabschnittsbereichs vorbeilaufen, im Fernfeld des Lichtstrahlungsfeldes eine Interferenz zweier im Nahfeld noch getrennter Punktmarken zu einer einzigen gemeinsamen Punktmarke zu erreichen. Dies hat insbesondere im Hinblick auf die Helligkeit und damit die Wahrnehmbarkeit der Punktmarke Vorteile.

Zur Erzeugung kohärenten und/oder monochromatischen Lichts sind verschiedene Realisationen oder Ausführungsformen für die Lichtquelleneinrichtung denkbar.

Vorteilhaft ist, wenn die Lichtquelleneinrichtung eine Laserlichtquelle aufweist oder von einer solchen gebildet wird. Diese kann monochromatisches kohärentes Licht mit einer hohen Intensität erzeugen

Dabei ist grundsätzlich jegliche Laserlichtquelle einsetzbar, wobei besonders vorteilhaft die Verwendung einer Laserdiode oder einer Anordnung einer Mehrzahl Laserdioden als Lichtquelleneinrichtung oder im Bereich davon ist. Diese sind besonders kompakt und besitzen einen vergleichsweise geringen Energiebedarf.

Starken Einfluss auf die Qualität im Hinblick auf Helligkeit, Kontrast und Abbildungsschärfe bei den Lichtmarken hat die Strahlform des sekundären Lichtstrahlenbündels, welches ja mit der Projektionsoptik wechselwirkt. Dazu ist in vorteilhafter Weise bei einer weiteren Ausführungsform der erfindungsgemäßen Vorrichtung zur Strahlformung bezüglich des sekundären Lichtstrahlenbündels zwischen der Kollimationsoptik und der Projektionsoptik eine Blendeneinrichtung vorgesehen. Diese Blendeneinrichtung gibt dem sekundären Lichtstrahlenbündel eine bestimmte symmetrische Form und räumliche Ausdehnung. Die Blendeneinrichtung kann auch Teil der Kollimationsoptik sein.

Die Blendeneinrichtung kann bei bestimmten Anwendungen als Kreisblende oder als Blende in Form einer Ellipse ausgebildet sein. Denkbar sind aber auch Rechteckblenden. Diese Formen können die Blendeneinrichtung selbst bilden oder sie können als Bestandteile einer Blendeneinrichtung mit einer Mehrzahl von Blenden und gegebenenfalls weiteren Komponenten vorhanden sein.

Besonders vorteilhaft ist es dabei, wenn die jeweilige Blendeneinrichtung, z. B. als eine Kreisblende oder eine Rechteckblende, in Bezug auf den Querschnitt des zu begrenzenden sekundären Lichtstrahlenbündels konzentrisch ausgebildet und angeordnet ist. Das bedeutet, dass die jeweilige Blendeneinrichtung einen geometrischen Mittelpunkt oder Schwerpunkt besitzt und dass dieser geometrische Mittelpunkt oder Schwerpunkt mit dem geometrischen Mittelpunkt oder Schwerpunkt des Querschnitts des sekundären Lichtstrahlenbündels in etwa übereinstimmt.

Zur weiteren Konkretisierung des erfindungsgemäßen Prinzips werden die Größenverhältnisse der einzelnen optischen Komponenten, der jeweiligen Strahlenbündel und der verwendeten Lichtwellenlänge oder Lichtwellenlängen geeignet gewählt ausgebildet.

Bei einer besonders vorteilhaften Ausführungsform der erfindungsgemäßen Vorrichtung ist durch Wahl der Art und/oder der Geometrie der Lichtquelleneinrichtung, der Kollimationsoptik und/oder deren geometrischer und/oder Lagebeziehung zueinander das sekundäre Lichtstrahlenbündel mit einem im Wesentlichen elliptischen Querschnitt ausbildbar. Dieser hat insbesondere eine bestimmte große Halbachse a und eine bestimmte kleine Halbachse b.

Bei einer Ausführungsform der erfindungsgemäßen Vorrichtung ist es vorgesehen, dass die große Halbachse a des Querschnitts des sekundären Lichtstrahlenbündels in etwa senkrecht zur Symmetrieachse X der Zylinderachse verlaufend gewählt und ausgebildet ist.

Dann ist es von Vorteil, dass die große Halbachse a des Querschnitts des sekundären Lichtstrahlenbündels in etwa dem 8-fachen Radius R der Zylinderlinse bzw. dem 4-fachen optischen Wirkdurchmesser D der Zylinderlinse entspricht. Zusätzlich oder alternativ ist dabei vorgesehen dass die kleine Halbachse b des Querschnitts des sekundären Lichtstrahlenbündels in etwa dem 2-fachen Radius R der Zylinderlinse bzw. dem 1-fachen Wirkdurchmesser der Zylinderlinse entspricht.

Bei einer weiteren Ausführungsform der erfindungsgemäßen Vorrichtung wird dann eine Kreisblende vorgesehen, deren Radius Rkb etwa dem 4-fachen Radius R der Zylinderlinse bzw. etwa dem 2-fachen optischen Wirkdurchmesser D der Zylinderlinse entspricht. Alternativ kann eine Rechteckblende vorgesehen sein, welche eine erste Kante c senkrecht zur Symmetrieachse X der Zylinderlinse aufweist, die etwa dem 3-fachen Radius R der Zylinderlinse bzw. dem 1, 5-fachen optischen Wirkdurchmesser D der Zylinderlinse entspricht, und welche eine zweite Kante d parallel zur Symmetrieachse X der Zylinderlinse aufweist, welche etwa dem 5-fachen Radius der Zylinderlinse bzw. etwa dem 2,5-fachen optischen Wirkdurchmesser D der Zylinderlinse entspricht.

Bei einer alternativen Ausführungsform der erfindungsgemäßen Vorrichtung ist es vorgesehen, dass die große Halbachse a des Querschnitts des sekundären Lichtstrahlenbündels in etwa parallel zur Symmetrieachse X der Zylinderlinse verlaufend gewählt und ausgebildet ist.

Bei dieser Variante ist es dann von besonderem Vorteil, wenn die große Halbachse a des Querschnitts des sekundären Lichtstrahlenbündels in etwa dem 12-fachen Radius R der Zylinderlinse bzw. etwa dem 6-fachen optischen Wirkdurchmesser D der Zylinderlinse entspricht. Alternativ oder zusätzlich ist es dann vorgesehen, dass die kleine Halbachse b des Querschnitts des sekundären Lichtstrahlenbündels in etwa dem 4-fachen Radius R der Zylinderlinse bzw. etwa dem 2-fachen Wirkdurchmesser D der Zylinderlinse entspricht.

Auch bei dieser Ausführungsform der erfindungsgemäßen Vorrichtung sind eine Kreisblende oder alternativ eine Rechteckblende denkbar.

Bei der Verwendung einer Kreisblende ist es von Vorteil, wenn deren Radius Rkb etwa dem 4-fachen oder dem 6-fachen Radius R der Zylinderlinse bzw. etwa dem 2-fachen bzw. etwa dem 3-fachen optischen Wirkdurchmesser D der Zylinderlinse entspricht.

Bei der Verwendung der Rechteckblende weist diese eine erste Kante c senkrecht zur Symmetrieachse X der Zylinderlinse auf, welche etwa dem 3-fachen oder etwa dem 6-fachen Radius R der Zylinderlinse bzw. etwa dem 1,5-fachen oder etwa dem 3-fachen optischen Wirkdurchmesser D der Zylinderlinse entspricht. Ferner besitzt die Rechteckblende eine zweite Kante d parallel zur Symmetrieachse X der Zylinderlinse, und zwar entsprechend etwa dem 4-fachen Radius R der Zylinderlinse bzw. etwa dem 2-fachen optischen Wirkdurchmesser D der Zylinderlinse.

Die bisher beschriebenen Ausführungsformen sind dazu geeignet, eine Linienmarke auszubilden, auf der sich als Bezugspunkt ein oder zwei Punktmarken darstellen lassen.

Diese und weitere Aspekte der vorliegenden Erfindung ergeben sich auch aus der nachfolgenden Darstellung:

Herkömmlicherweise können Linienmarken z. B. als eine Reihe von diskreten Punkten mit Hilfe von diffraktiven Elementen erzeugt werden. Der Nachteil dabei ist, dass die Linie nicht kontinuierlich ist. Eine andere konventionelle Linienmarke wird durch eine einfache Zylinderlinse produziert. Der Nachteil ist, dass die Intensität auf einer breiten Linie verteilt ist, so dass die Linie bei großer Entfernung in bestimmten Lichtverhältnissen der Umgebung nicht mehr gut sichtbar ist. Auf der Linie ist kein Bezugspunkt zu erkennen, welcher aber in vielen Fällen gewünscht ist. Zum Beispiel, wenn die Linie senkrecht ausgerichtet ist, um einen nivellierten Punkt auf der Linie festzustellen.

Eine Idee der Erfindung ist, die Abbildung eines Bezugspunktes auf eine Linienmarke in großer Entfernung zu ermöglichen, ohne auf die Kontinuität der Linie zu verzichten. Dies wird durch die erfindungsgemäße Vorrichtung erreicht.

Der Durchmesser des kollimierten oder in einer bestimmten Entfernung fokussierten Laserstrahls ist größer als der optische Wirkdurchmesser der Zylinderlinse. So können sich zwei Randbereiche des kollimierten Laserstrahls ungehindert weiter nach vorne ausbreiten. Im Nahfeld werden eine Linie und zwei Punkte um das Zentrum gebildet. Ab einem bestimmten Abstand von der Zylinderlinse, welcher vom Außendurchmesser der Zylinderlinse abhängig ist, also im Fernfeld, werden die beiden Randstrahlenbündel der Punkte zu einem Punkt interferieren.

Der Strahldurchmesser und die Blende können bestimmte Formen annehmen und an den Rändern des Hauptlaserstrahls so gestaltet werden, dass die Bildung des Punktes im Fernfeld beeinflusst wird.

Die Blenden können in Form eines Kreises oder Rechtecks ausgebildet sein.

Die Großachse oder große Halbachse a des Laserstrahls kann senkrecht zur Zylinderlinsenachse Z stehen.

Z. B. kann der Randstrahl durch eine Kreisblende geschnitten werden, so dass die eine Seite des Randstrahls eine Krümmung bekommt, d. h. der Randstrahl nimmt eine unsymmetrische Form an. Dagegen wird der Randstrahl durch eine Rechteckblende annähernd symmetrisch. Das Beugungsbild wird dadurch bessere Symmetrie aufweisen.

Einfluss der Blendengröße: Je größer die Blendendurchmesser bzw. je länger die Breite des Rechtecks wird, desto schmaler erscheint das Beugungsbild in horizontaler Richtung, d. h. es ergibt sich eine bessere Ortsauflösung in horizontaler Richtung.

Die Großachse oder große Halbachse a der Ellipse des Querschnitts des sekundären Lichtstrahlenbündels des Laserstrahls kann auch parallel zur Zylinderachse der Zylinderlinse stehen. Diese Ausführungsformen werden auch als Line-Dot-Laser bezeichnet. Dann hat die Blendenform mehr Einfluss auf das Beugungsbild als die Blendengröße, weil die Breite des Laserstrahls in diesen Fällen bedingt beschränkt ist. Der Versuch, die Breite zu vergrößern, bringt den großen Nachteil des Energieverlustes mit sich, damit leidet auch die Sichtbarkeit der Linienmarke.

Es können zusätzlich zwei in entgegen gesetzten Richtungen ausgerichtete Punktstrahlen für externe Punktmarken vorgegeben werden durch zwei Spiegelflächen integriert auf der Zylinderlinse. Die beiden Enden der Zylinderlinse sind dann mit Spiegelflächen versehen, welche z. B. 45° zur Zylinderachse liegen. Außerdem liegen sie 90° zueinander. Diese Ausführungsform wird auch als Line- Multibeam-Laser bezeichnet.

Die Großachse a der Ellipse des Laserstrahls kann dann parallel zur Verbindungslinie zweier runder Blenden ausgerichtet sein. An den beiden 45°-Spiegelflächen A werden zwei Teilstrahlen um 90° umgelenkt. Die kurze Seite (bzw. die Breite) b des Querschnitts des Laserstrahls muss größer sein als der Durchmesser D der Zylinderlinse, so dass sich ein Teil des Laserstrahls vorbei an beiden Seiten der Zylinderlinse weiter ausbreiten kann. Die zwei auf diese Weise erzeugten Strahlenpunkte stehen 90°-senkrecht auf der Fläche, welche der Linienlaser aufspannt.

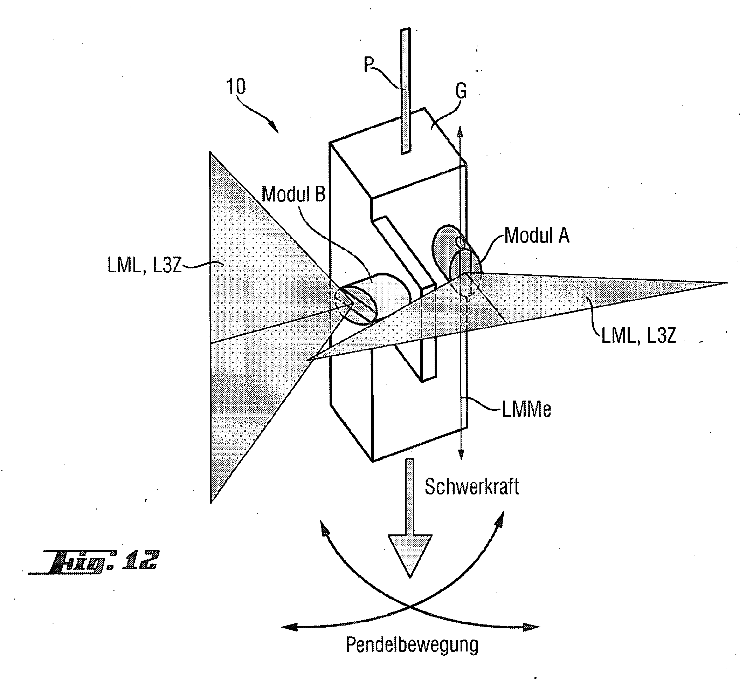

Es kann in einem Gerät auch eine Kombination aus Line-Dot- und Line-Multibeam-Laser vorgesehen sein, wie das in Fig. 12 gezeigt ist. Es besteht aus einem Modul A als Line-Multibeam-Laser und einem Modul B als Line-Dot-Laser. Die beiden Module sind auf einem Träger befestigt so, dass die beiden Linienmarken der Module A und B senkrecht zueinander stehen, wobei die zwei Punktmarken nach oben und unten im Lot zeigen. Die Punktlaser von Module A und B bilden ein rechtwinkliges Koordinatensystem und haben gleichen Ursprung (Koinzidenz). Der ganze Aufbau ist an einem Pendel, beispielsweise an einer stabilen Schnur oder Faden, aufgehängt. Durch Wirkung der Schwerkraft ist der ganze Aufbau im Lot ausgerichtet und kann hin- und herpendeln.

### Ausrichtungen des Linie-Dot-Lasers:

Drei mögliche Lagen des Linie-Dot-Lasers sind denkbar.
- Die Linie ist in waagerechter Lage.
- Die Linie ist im Lot, so dass die Punktmarke in horizontaler Lage liegt.
- Die Linie ist so ausgerichtet, dass die Punktmarke über dem Modul und im Lot liegt.

Die Kombinationen dieser drei Lagen durch Verwendung von drei solchen Optikeinheiten ist bei den Anwendungen denkbar.

### Ausrichtungen des Linie-Multibeam-Lasers:

Zwei mögliche Lagen des Linie-Multibeam-Lasers sind denkbar, nämlich den Laser so auszurichten, dass die beiden Strahlpunkte im Lot liegen, oder den Laser so auszurichten, dass die beiden Strahlenpunkte und die Punktmarke in horizontaler Lage liegen.

Diese und weitere Aspekte der vorliegenden Erfindung werden nun anhand bevorzugter Ausführungsformen auf der Grundlage der beigefügten Figuren näher erläutert.
- **Fig. 1, 2**: zeigen in schematischer und teilweise geschnittener Draufsicht zwei Ausführungsformen der erfindungsgemäßen Vorrichtung zum Erzeugen und Projizieren von Lichtmarken.
- **Fig. 3A, 3B**: zeigen Fotografien der mit einer erfindungsgemäßen Vorrichtung zum Erzeugen und Projizieren von Lichtmarken erzeugten Lichtmarken im Nahfeld bzw. im Fernfeld.
- **Fig. 4A-6B**: zeigen in schematischer Ansicht Details verschiedener Ausgestaltungsformen der erfindungsgemäßen Vorrichtung zum Erzeugen und Projizieren von Lichtmarken.
- **Fig. 7-10**: zeigen verschiedene Aspekte einer anderen Ausführungsform der erfindungsgemäßen Vorrichtung zum Erzeugen und Projizieren von Lichtmarken.
- **Fig. 11A, 11B**: zeigen zwei Module unter Verwendung der erfindungsgemäßen Vorrichtung zum Erzeugen und Projizieren von Lichtmarken.
- **Fig. 12-14B**: zeigen in schematischer Ansicht eine mögliche Anwendung für die Module aus Fig. 11A und 11B.

Nachfolgend bezeichnen dieselben Bezugszeichen in Aufbau und/oder Funktion ähnliche oder gleiche Bauelemente oder Baugruppen, ohne dass in jedem Fall ihres Auftretens eine detaillierte Beschreibung dieser Bauelemente oder Baugruppen wiederholt wird.

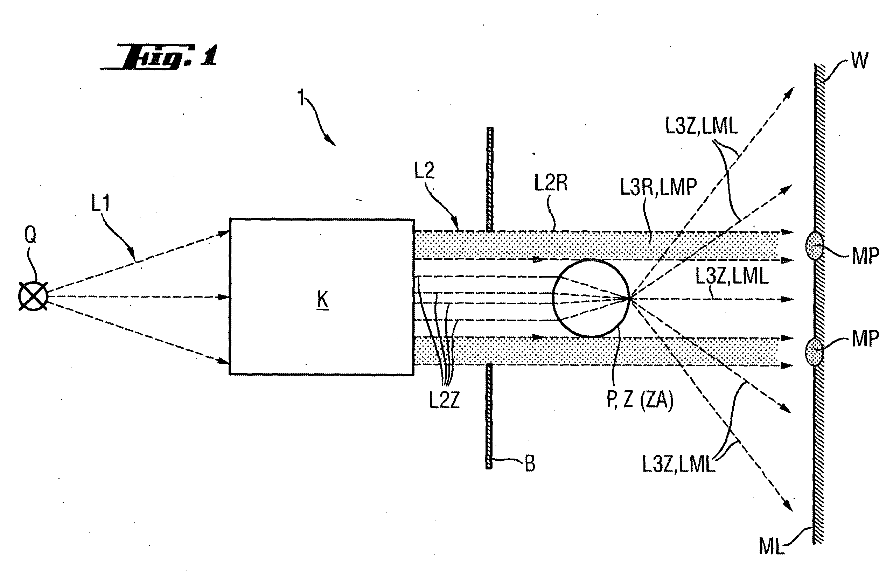

Fig. 1 ist eine schematische Draufsicht auf eine Ausführungsform der erfindungsgemäßen Vorrichtung 1 zum Erzeugen und Projizieren von Lichtmarken.

Hauptkomponenten der Vorrichtung 1 sind die Lichtquelleneinrichtung Q, die Kollimationsoptik K sowie die Projektionsoptik P. Die Lichtquelleneinrichtung Q erzeugt Primärlicht in Form eines primären Lichtstrahlenbündels L1. Die Kollimationsoptik K nimmt zumindest einen Teil des primären Lichtstrahlenbündels L1 auf und formt daraus ein sekundäres Lichtstrahlenbündel L2, welches im Vergleich zum primären Lichtstrahlenbündel L1 kollimiert, parallelisiert sowie gegebenenfalls aufgeweitet ist. Ferner wird durch die Kollimationsoptik K das sekundäre Lichtstrahlenbündel L2 in gerichteter Art und Weise ausgegeben oder ausgesandt. Dies erfolgt derart, dass die im Strahlengang vorgesehen Projektionsoptik P zumindest zum Teil bestrahlt wird. Die Projektionsoptik P besteht in der Ausführungsform der Fig. 1 im Wesentlichen aus einer Zylinderlinse Z. In Fig. 1 ist ein Querschnitt durch die gesamte optische Anordnung der erfindungsgemäßen Vorrichtung 1 dargestellt, so dass die Zylinderlinse Z der Projektionsoptik P hier in Form eines Kreises erscheint.

Erfindungsgemäß wird die Zylinderlinse Z so mit dem sekundären Lichtstrahlenbündel L2 beaufschlagt, dass ein Zylinderabschnittsbereich ZA der Zylinderlinse Z durch ein Zentralstrahlenbündel L2Z des sekundären Lichtstrahlenbündels L2 im Wesentlichen vollständig bestrahlt wird. Gleichzeitig läuft ein dazu direkt benachbartes Randstrahlenbündel L2R des sekundären Lichtstrahlenbündels L2 am Mantel M der Zylinderlinse Z direkt und in im Wesentlichen ungehinderter Form vorbei, und zwar in Form eines Randstrahlenbündels L3R des tertiären Lichtstrahlenbündels L3. Das Zentralstrahlenbündel L2Z des sekundären Lichtstrahlenbündels L2 erfährt durch Brechung eine Wechselwirkung mit dem Material der Zylinderlinse Z der Projektionsoptik P. Dadurch wird das Zentralstrahlenbündel L2Z zerstreut, aufgeweitet oder aufgespreizt, so dass die einzelnen Strahlen des die Zylinderlinse Z verlassenden Zentralstrahlenbündels L3Z im Wesentlichen in einer wohldefinierten Ebene zerstreut den weiteren Raum durchmessen.

Bei der Ausführungsform der Fig. 1 sind zwei Randstrahlen L2R bzw. L3R des sekundären Lichtstrahlenbündels L2 bzw. des tertiären Lichtstrahlenbündels L3 vorgesehen. Diese Randstrahlenbündel L2R, L3R führen in der Anwendung zur Ausbildung von Punktmarken MP, wenn ein Objekt, z. B. in Form einer Wand W, vom tertiären Lichtstrahlenbündel L3 getroffen wird. In der Anordnung der Fig. 1 ist das so genannte Nahfeld gezeigt, bei welchem die beiden Randstrahlenbündel L2R, L3R noch zu separierten Punktmarken MP führen.
Gleichzeitig ist auf der Wand W auch die entsprechende Linienmarke ML gezeigt, die durch die entsprechenden Zentralstrahlenbündel L3Z des tertiären Lichtstrahlenbündels L3 erzeugt wird.

Die Randstrahlenbündel L3R des tertiären Lichtstrahlenbündels L3 bilden somit Strahlenbündel LMP für Punktmarken, während das Zentralstrahlenbündel L3Z des tertiären Lichtstrahlenbündels L3 ein Strahlenbündel LML für die Linienmarke bildet.

Zur Beeinflussung der Geometrie des sekundären Lichtstrahlenbündels L2 und der entsprechenden Randstrahlen L2R bzw. Zentralstrahlen L2Z ist bei der Ausführungsform der Fig. 1 zwischen der Kollimationsoptik K und der Projektionsoptik P eine Blendeneinrichtung B vorgesehen.

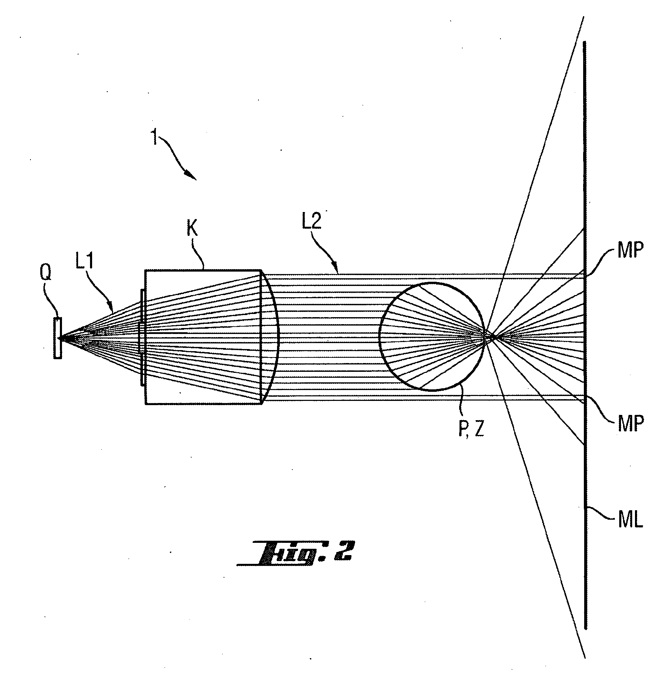

Die Fig. 2 zeigt einen zu dem Aufbau der Fig. 1 ähnlichen Aufbau für eine erfindungsgemäße Vorrichtung 1 zur Erzeugung und Aussendung von Lichtmarken. Dort besteht die Lichtquelleneinrichtung Q aus einer Laserdiode bzw. aus einem Laserdiodenarray. Ferner ist die Kollimationsoptik dadurch stärker konkretisiert, dass hier die verschiedenen optischen Eingangs- und Ausgangslinsensysteme angedeutet sind. Eine Blende wie bei der Ausführungsform der Fig. 1 ist hier in der Kollimationsoptik K integriert ausgebildet vorgesehen.

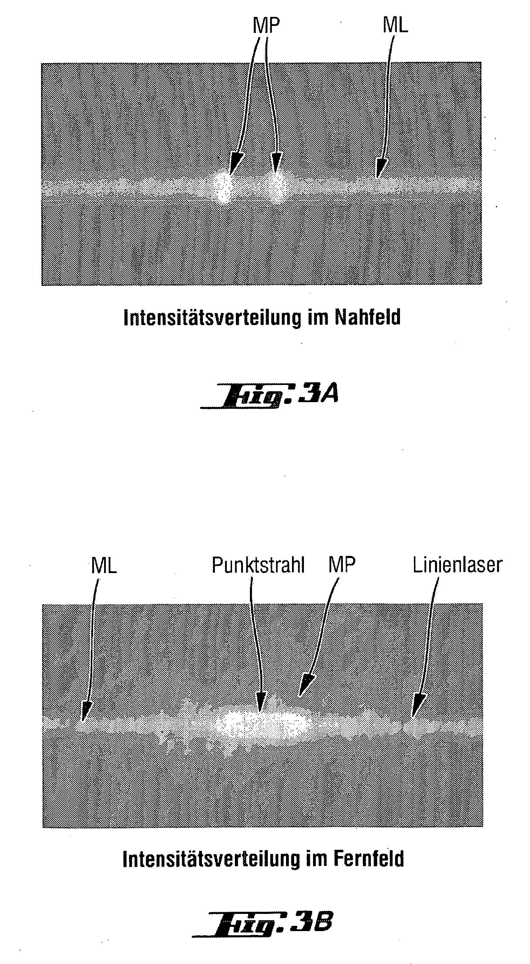

Fig. 3A zeigt in Form einer Fotografie die auf die Wand W projizierten Lichtmarken in Form der Linienmarke ML und in Form der beiden Punktmarken MP, wie sie bereits auch in der Fig. 1 schematisch angedeutet sind. Insofern zeigt die Fig. 3A die Verhältnisse des Strahlungsfelds im Nahbereich, also das so genannte Nahfeld der Intensitätsverteilung.

Im Gegensatz dazu veranschaulicht die Fig. 3B in Form einer Fotografie die Intensitätsverteilung im so genannten Fernfeld, also vergleichsweise weit von der Vorrichtung 1 zum Erzeugen und Projizieren von Lichtmarken entfernt. Dabei haben sich aufgrund der Eigenschaften der optischen Anordnung und des verwendeten Lichts die beiden Randstrahlen L3R des tertiären Lichtstrahlenbündels L3 durch Interferenz überlagert, so dass neben der Linienmarke ML auf der Wand W nunmehr ausschließlich eine einzige überlagerte Punktmarke MP erkennbar ist.

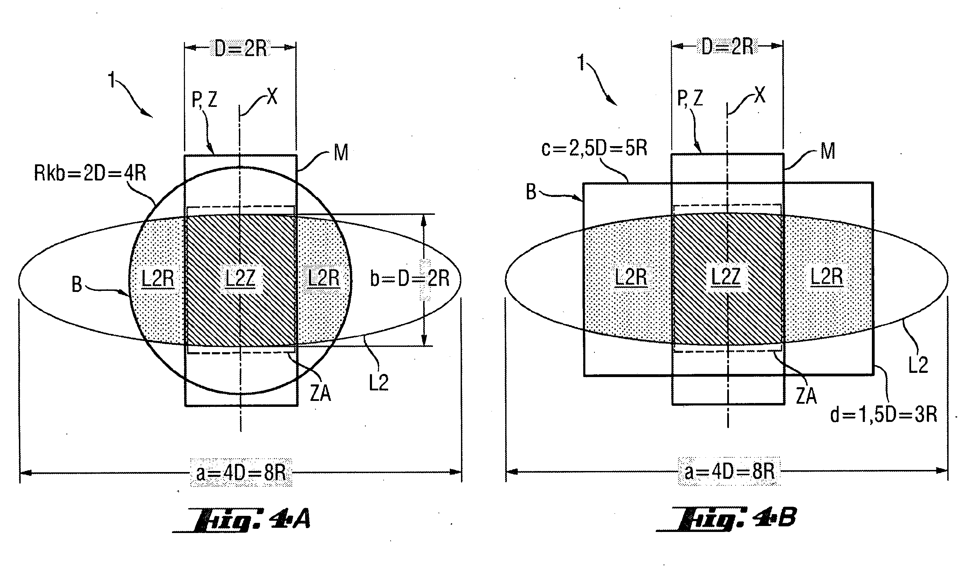

Die Fig. 4A bis 5B veranschaulichen verschiedene geometrische Verhältnisse zwischen dem sekundären Lichtstrahlenbündel L2 der verwendeten Blende B oder Blendeneinrichtung B und der Zylinderlinse Z der Projektionsoptik P.

Bei den nachfolgenden Figuren ist vorausgesetzt, dass der Zylinderlinse Z der Projektionsoptik P ein Kreiszylinder zugrunde liegt, welcher als Grundfläche einen Kreis mit dem Radius R aufweist. Entsprechend hat in den nachfolgenden Figuren die Zylinderlinse Z einen effektiven oder optischen Wirkdurchmesser D, welcher dem 2-fachen Radius R entspricht. Alle weiteren Angabe sind somit relative Angaben im Vergleich zum Radius R der Zylinderlinse Z zugrunde liegenden Kreisgrundfläche.

Weiterhin wird nachfolgend vorausgesetzt, dass das sekundäre Lichtstrahlenbündel L2 einen elliptischen Querschnitt aufweist mit einer großen Halbachse a und einer kleinen Halbachse b.

Bei der Ausführungsform der Fig. 4A ist die große Halbachse a senkrecht zur Symmetrieachse X der Zylinderlinse Z orientiert und entspricht in etwa dem 8-fachen Radius der Zylinderlinse Z bzw. dem einfachen optischen Wirkdurchmesser D der Zylinderlinse Z. Die kleine Halbachse b des sekundären Lichtstrahlenbündels L2 ist parallel zur Symmetrieachse X der Zylinderlinse Z ausgerichtet und entspricht in ihrer Ausdehnung dem doppelten Radius R der Zylinderlinse Z oder dem optischen Wirkdurchmesser D der Zylinderlinse Z. Bei der Ausführungsform der Fig. 4A wird eine kreisförmige Blende B mit einem Blendendurchmesser Rkb verwendet, welcher dem doppelten optischen Wirkdurchmesser D der Zylinderlinse Z, also dem 4-fachen Radius der Zylinderlinse Z entspricht. Die Blende B und das sekundäre Lichtstrahlenbündel L2 sind zueinander konzentrisch angeordnet. Dargestellt sind auch die Randstrahlenbündel L2R des sekundären Lichtstrahlenbündels L2, die am Mantel M der Zylinderlinse Z vorbeilaufen. Erkennbar ist auch das Zentralstrahlenbündel L2Z des sekundären Lichtstrahlenbündels L2, welches den Zylinderabschnittsbereich ZA der Zylinderlinse Z der Projektionsoptik P im Wesentlichen vollständig durchstrahlt.

Im Gegensatz zur Fig. 4A wird bei der Fig. 4B eine rechteckförmige Blende B verwendet. Diese besitzt eine Längskante oder lange Kante c = 5 R = 2,5 D, welche senkrecht steht zur Symmetrieachse X der Zylinderlinse Z. Die kleine Kante d = 3 R = 1,5 D ist zur Symmetrieachse X der Zylinderlinse Z parallel ausgerichtet. Auch bei dieser Anordnung ist der Querschnitt des sekundären Lichtstrahlenbündels L2 konzentrisch mit der Rechteckblende ausgebildet.

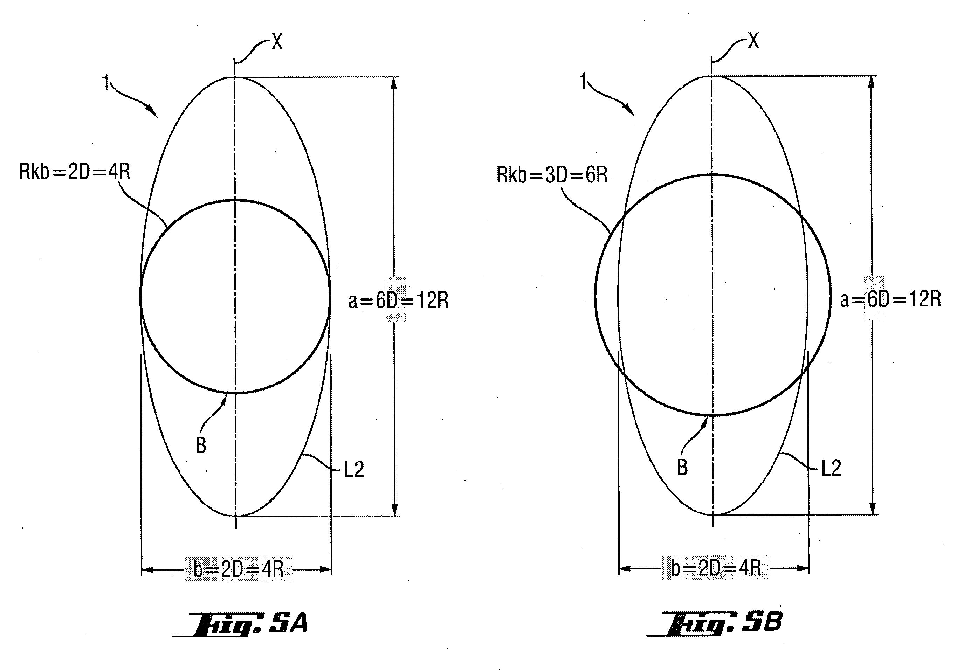

Bei der Ausführungsform der Fig. 5A bis 6B ist die große Halbachse a des Querschnitts des sekundären Lichtstrahlenbündels L2 parallel ausgerichtet zur Symmetrieachse X der Zylinderlinse Z und besitzt eine Ausdehnung, welche dem 12-fachen Radius R der Zylinderlinse Z bzw. dem 6-fachen optischen Wirkdurchmesser D der Zylinderlinse Z entspricht. Die kleine Halbachse b des Querschnitts des sekundären Lichtstrahlenbündels L2 ist jeweils senkrecht zur Symmetrieachse X der Zylinderlinse Z ausgebildet und besitzt eine Ausdehnung, welche dem 4-fachen Radius R der Zylinderlinse Z bzw. dem doppelten optischen Wirkdurchmesser D der Zylinderlinse Z entspricht.

Bei den Ausführungsformen der Fig. 5A und 5B sind kreisförmige Blenden B vorgesehen, und zwar konzentrisch zum Querschnitt des sekundären Lichtstrahlenbündels L2 und mit Radien Rkb = 4 R = 2 D bzw. Rkb = 6 R = 3 D.

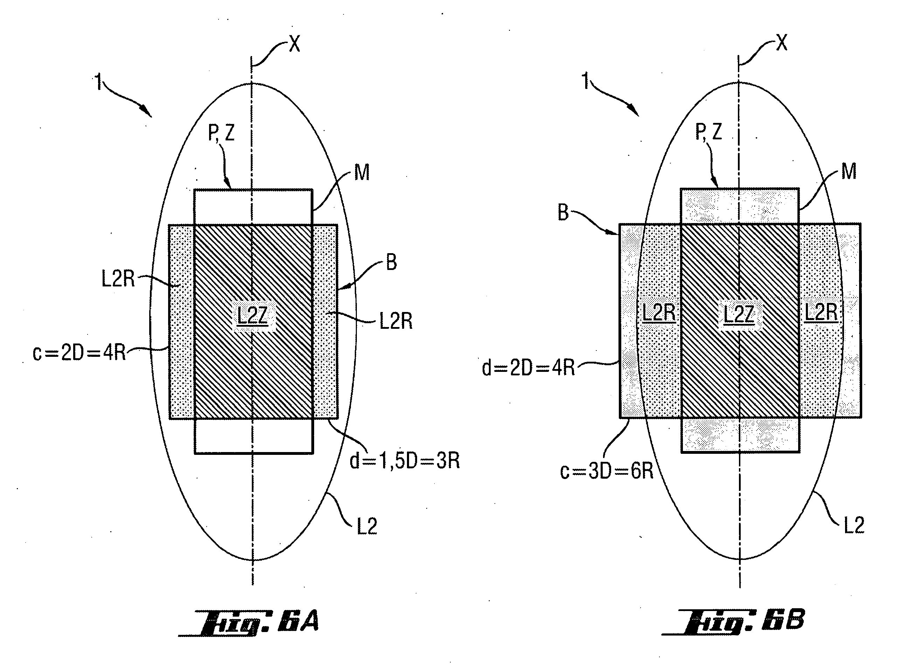

Bei den Fig. 6A und 6B ist jeweils eine rechteckförmige Blende B vorgesehen, und zwar mit einer langen Kante c parallel bzw. senkrecht zur Symmetrieachse X der Zylinderlinse Z. Die lange Kante c hat eine Ausdehnung, die dem 4-fachen Radius R der Zylinderlinse (2-fachen optischen Wirkdurchmesser D) bzw. dem 6-fachen Radius der Zylinderlinse Z (3-fachen optischen Wirkdurchmesser D) entspricht. Die kurze Kante d der Rechteckblende B der Fig. 6A und 6B erfüllt die Bedingungen d = 3 R = 1,5 D bzw. d = 4 R = 2 D.

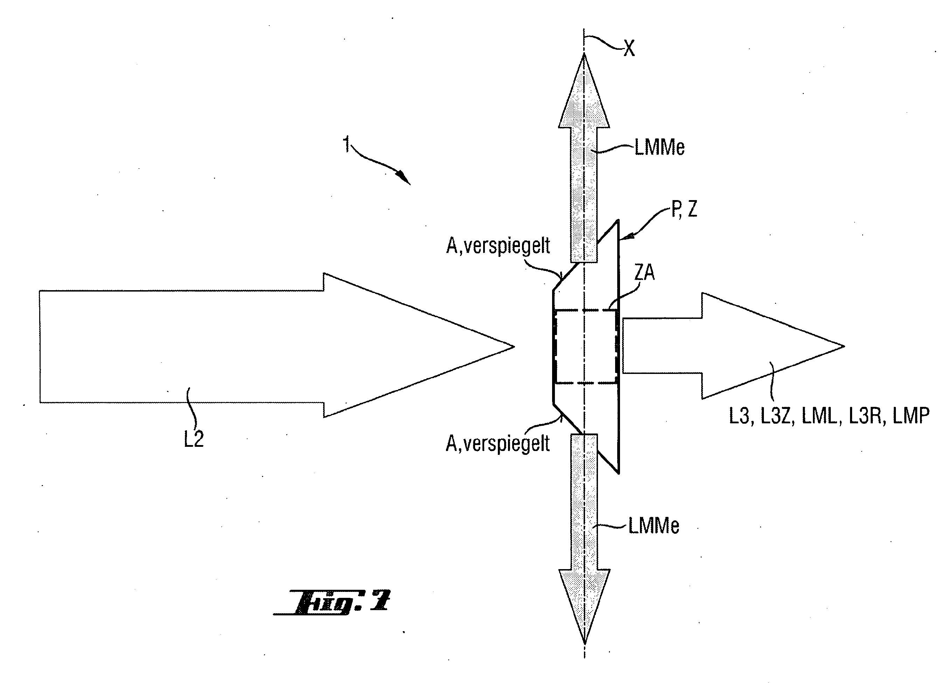

Fig. 7 bis 10 zeigen Ausführungsformen der erfindungsgemäßen Vorrichtung 1 zum Erzeugen und Projizieren von Lichtmarken, bei welchen der Zylinderlinse Z der Projektionsoptik P ein Schiefzylinder zugrunde liegt, und zwar mit gegenüber der Symmetrieachse X der Zylinderlinse Z um 45° geneigten Endflächen A, welche darüber hinaus derart verspiegelt und angeordnet sind, dass ein Teil des sekundären Lichtstrahlenbündels L2 daran derart reflektiert werden kann, dass senkrecht zur Projektionsebene für die Linienmarke ML externe und weitere Punktmarken (MPe) projizierbar und abbildbar sind. Diese zusätzlichen und externen Punktmarken oder Fleckmarken MPe werden über an den spiegelnden Endflächen A der Zylinderlinse Z reflektierte Lichtstrahlenbündel LMMe vermittelt, wie das in Fig. 7 schematisch dargestellt ist.

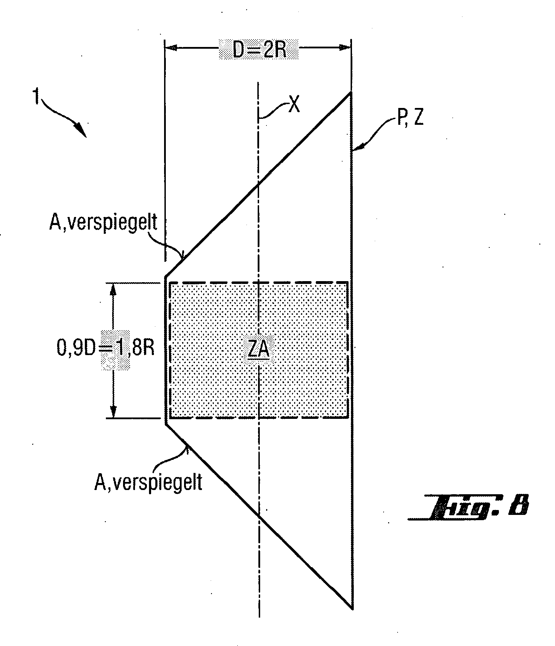

Fig. 8 zeigt eine weiter schematisierte und geschnittene Seitenansicht der in Fig. 7 dargestellten Situation, wobei hier auch weitere Dimensionierungsangaben vorgesehen sind. Der Durchmesser der Zylinderlinse Z ist wieder mit R bezeichnet. Der Zylinderabschnittsbereich ZA, welcher ausgebildet ist, die Linienmarke zur Erzeugung zu projizieren, besitzt hier eine Höhe, welche dern 1,8-fachen Radius R der Zylinderlinse Z entspricht.

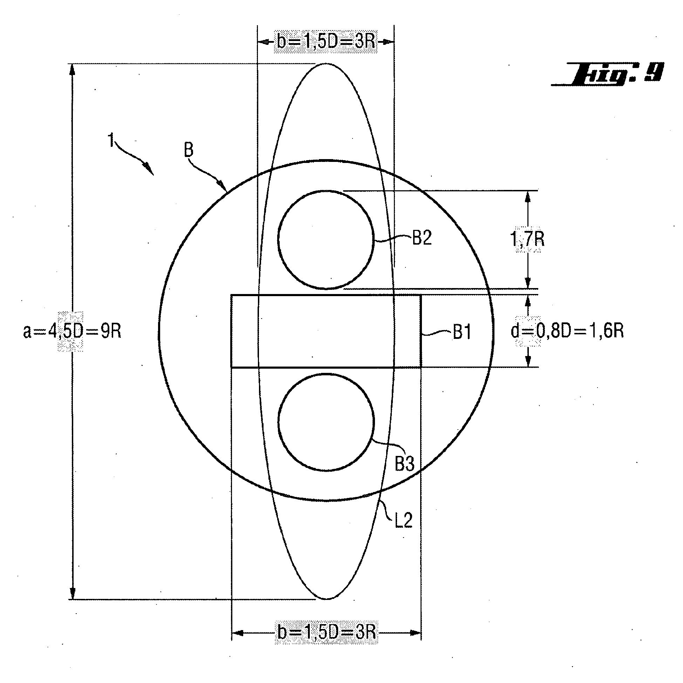

Fig. 9 zeigt Details in Bezug auf das sekundäre Lichtstrahlenbündel L2 und die Blende B, wie sie bei einer besonderen Ausführungsform der in der Fig. 7 und 8 gezeigten Vorrichtung 1 zum Erzeugen und Projizieren von Lichtmarken verwendet werden könnten.

Auch bei der Ausführungsform von Fig. 9 ist die große Halbachse a, die in Fig. 9 nicht dargestellt ist, parallel zur Symmetrieachse X der Zylinderlinse Z ausgerichtet und besitzt eine Ausdehnung, welche dem 9-fachen Radius R der Zylinderlinse Z bzw. dem 4,5-fachen optischen Wirkdurchmesser D der Zylinderlinse Z entspricht. Die kleine Halbachse b des Querschnitts des sekundären Lichtstrahlenbündels L2 ist senkrecht zur Symmetrieachse X der Zylinderlinse Z ausgedehnt und besitzt eine Erstreckung von etwa dem 3-fachen Radius R der Zylinderlinse Z bzw. dem 1,5-fachen optischen Wirkdurchmesser D der Zylinderlinse Z. Die Blende B besteht aus einer kreisförmigen Platte mit drei Ausnehmungen B1, B2 und B3. Die erste Ausnehmung B1 besitzt Recheckform zur Erzeugung der Randstrahlenbündel L2R und des Zentralstrahlenbündels L2Z zur Erzeugung der eigentlichen Linienmarke ML und der eigentlichen Punktmarke MP. Die lange Kante c = 3,5 R = 1,75 D ist senkrecht zur Symmetrieachse X der Zylinderlinse Z ausgerichtet, wogegen die kurze Kante d = 1,6 R = 0,8 D parallel zur Symmetrieachse X der Zylinderlinse Z angeordnet ist. Die Ausnehmungen B2 und B3 der Blendeneinrichtung B sind im Wesentlichen gleichartig, kreisförmig und besitzen eine Radius Rkb = 1,7 R = 0,85 D. Diese kreisförmigen Ausnehmungen B2 und B3 sind mit den Zylinderendflächen A, welche verspiegelt sind, in etwa konzentrisch ausgebildet.

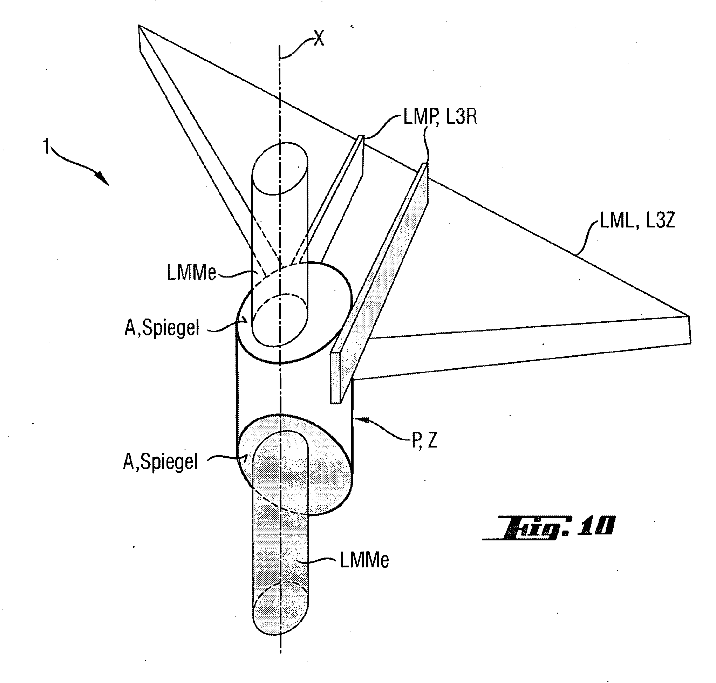

Fig. 10 zeigt in perspektivischer Ansicht von oben die Verhältnisse, wie sie sich bei der Anwendung der in den Fig. 7 bis 9 dargestellten Anordnung ergeben können. In der Anordnung der Fig. 10 ist das einfallende sekundäre Lichtstrahlenbündel L2 nicht dargestellt. An der Zylinderlinse Z der Projektionsoptik P in Form eines Schiefzylinders sind obere und untere Endflächen A als Spiegel ausgebildet. An diesen spiegelnden Endflächen der Zylinderlinse Z werden Anteile des hier nicht dargestellten sekundären Lichtstrahlenbündels L2 senkrecht nach oben bzw. nach unten reflektiert, und zwar in Form von Strahlenbündeln LMMe für auszubildende externe Punktmarkierungen MPe. Die Formulierung "senkrecht" bezieht sich auf diejenige Ebene, die vom tertiären Strahlenlichtbündel L3Z oder dem Linienmarkenstrahlenbündel LML gebildet wird. Dargestellt sind auch die Punktmarkenstrahlenbündel LMP, die auch hier wieder in Form der Randstrahlen L3Z des tertiären Strahlenbündels L3 in Erscheinung treten.

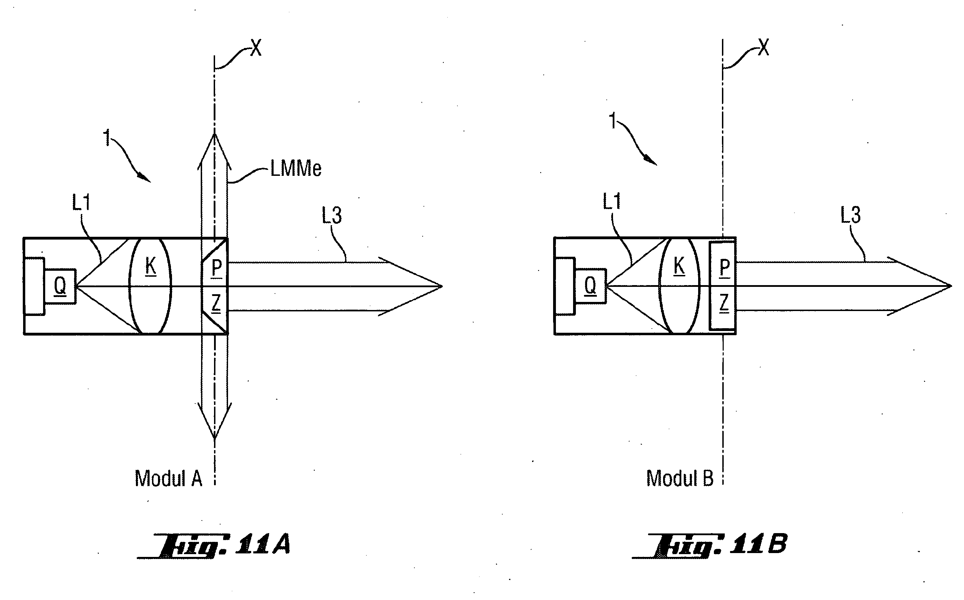

Die Fig. 11A und 11B zeigen noch einmal erfindungsgemäße Vorrichtungen 1, die in Form von Modulen A und B ausgebildet sind, und zwar in seitlichen Querschnittsansichten. Das Modul A entspricht in etwa einer Ausführungsform, wie sie in den Fig. 7 bis 10 dargestellt ist. Dagegen besitzt das Modul B im Wesentlichen die Struktur, wie sie in den Fig. 1 bis 6B dargestellt ist.

Fig. 12 zeigt eine Anordnung der Module A und B im Bereich einer Positioniervorrichtung 10. Diese Positioniervorrichtung 10 wird gebildet von einem Modulnträger G, z. B. in Form eines Gehäuses, in oder an welchem die Module A und B, und gegebenenfalls auch weitere Module befestigt und angeordnet sind. Die Anordnung der Module A und B erfolgt derart, dass die von den tertiären Lichtstrahlenbündeln L3 jeweils aufgespannten Ebenen etwa senkrecht zueinander stehen und dass die von den jeweiligen Punktmarkenstrahlenbündeln LMP definierten Geraden ebenfalls senkrecht aufeinander stehen. Das Gehäuse oder der Modulnträger G ist an einem Pendelfaden F derart befestigt, so dass bei senkrechter Ausrichtung des durch den Pendelfaden F und den Modulnträger G gebildeten Pendels, z. B. im Schwerefeld der Erde, der Pendelfaden F auf der durch das Modul A definierten Ebene senkrecht steht und zu der durch das Modul B definierten Ebene parallel verläuft.

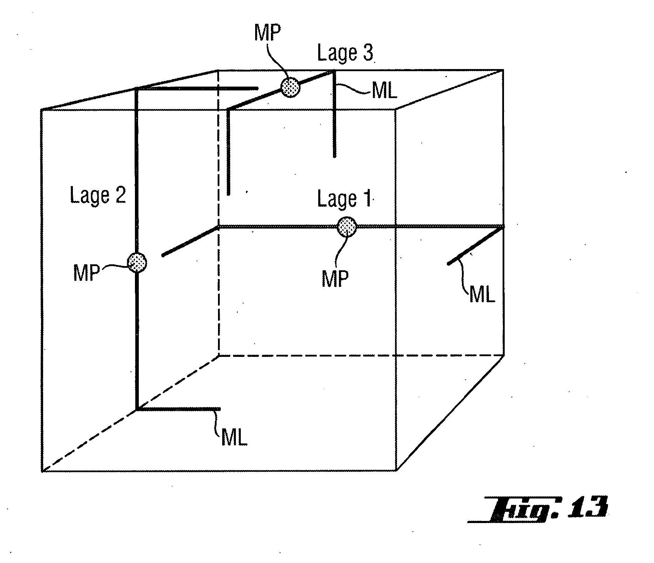

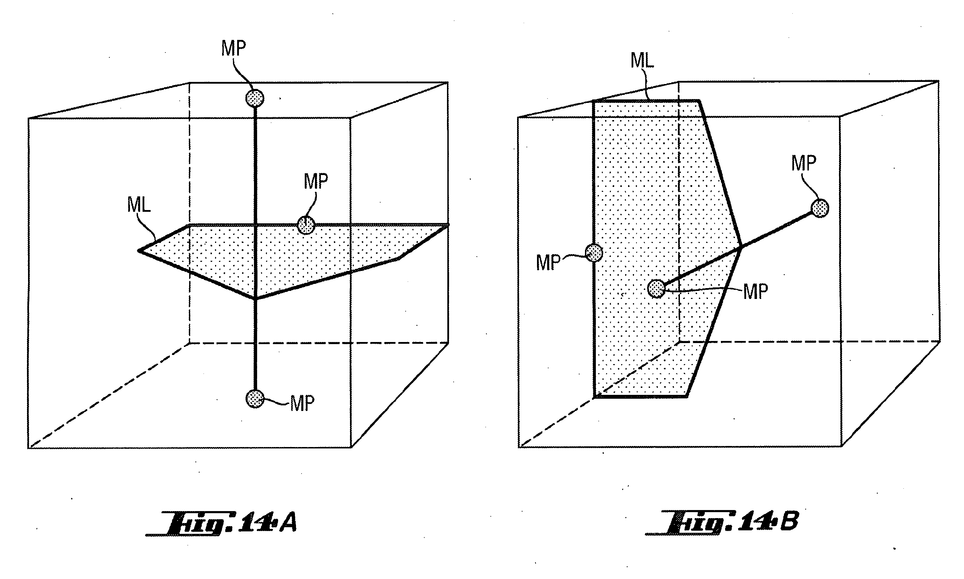

Die in den Fig. 13 bis 14B gezeigten Anordnungen beschreiben mögliche Positionierungen und Orientierungen, wie sie bei der Ausführungsform gemäß den Fig. 1 bis 6B bzw. bei der Ausführungsform gemäß den Fig. 7 bis 10 denkbar sind. Gemäß Fig. 13 kann eine Anordnung gemäß der Fig. 1 bis 6B drei verschiedene grundsätzliche Positionierungen zueinander annehmen. Bei der Ausführungsform der Fig. 7 bis 10 sind dagegen nur zwei grundsätzlich unterschiedliche Positionierungen im zweidimensionalen Raum möglich.

### Bezugszeichenliste

- 1: Erfindungsgemäße Vorrichtung zum Erzeugen und Projizieren von Lichtmarken
- a: Große Halbachse des sekundären Lichtstrahlenbündels L2
- A: Endfläche
- b: Kleine Halbachse des sekundären Lichtstrahlenbündels L2
- B: Blendeneinrichtung
- c: Erste Kante der Rechteckblende
- d: Zweite Kante der Recheckblende
- D: Kollimationsoptik, Kollimator, effektiver oder wirksamer Durchmesser, Wirkdurchmesser der Zylinderlinse
- L1: Primäres Lichtstrahlenbündel, primäres Licht, Primärlicht
- L2: Sekundäres Lichtstrahlenbündel, sekundäres Licht, Sekundärlicht
- L2R: Randstrahlenbündel
- L2Z: Zentralstrahlenbündel
- L3: Tertiäres Lichtstrahlenbündel, Tertiärlicht
- L3R: Randstrahlenbündel, Strahlenbündel für Punktmarke
- L3Z: Zentralstrahlenbündel, Strahlenbündel für Linienmarke
- LM: Markierungstrahlenbündel
- LML: Strahlenbündel für Linienmarke
- LMP: Strahlenbündel für Punktmarke
- M: Mantel
- MPe: Externe und weitere Punktmarke
- ML: Linienmarke
- MP: Punktmarke
- P: Projektionsoptik
- Q: Lichtquelleneinrichtung
- R: Radius der Zylinderlinse Z
- Rkb: Radius Kreisblende
- W: Wand
- X: Symmetrieachse der Zylinderlinse Z
- Z: Zylinderlinse
- ZA: Zylinderabschnitt der Zylinderlinse

## Patentansprüche

1. Vorrichtung zum Erzeugen und Projizieren von Lichtmarken,
mit:
- einer Lichtquelleneinrichtung (Q), welche zur Erzeugung und Aussendung eines primären Lichtstrahlenbündels (L1) ausgebildet und vorgesehen ist,
- einer Kollimationsoptik (K), welche zum Empfang des primären Lichtstrahlenbündels (L1) und zu dessen Kollimation, Parallelisierung und dabei Aufweitung in ein sekundäres Lichtstrahlenbündel (L2) sowie zum gerichteten Aussenden des sekundären Lichtstrahlenbündels (L2) ausgebildet und vorgesehen ist, und
- einer Projektionsoptik (P), welche zum Empfang zumindest eines Teils (L2Z) des sekundären Lichtstrahlenbündels (L2) und zur Wandlung des sekundären Lichtstrahlenbündels (L2) in mindestens ein für mindestens eine Lichtmarke (ML, MP) geeignetes tertiäres Lichtstrahlenbündel (L3) oder Markierungsstrahlenbündel (LM) und dessen Ausgabe und dabei Projektion mindestens einer Lichtmarke (ML, MP) ausgebildet und vorgesehen ist,
- wobei die Projektionsoptik (P) eine Zylinderlinse (2) aufweist
**dadurch gekennzeichnet,**
- **dass** die Projektionsoptik (P) mit dem sekundären Lichtstrahlerlenbündel (L2) oder einem Teil (L2Z) davon derart beaufschlagbar ist,
- **dass** die Zylinderlinse (Z) in dem Zylinderabschnittsbereich (ZA) in dem sie von einem Zentralstrahlenbündel (L2Z) des sekundären Lichtstrahlenbündels (L2) vollständig durchstrahlbar ist, in Form eines Kreiszylinders mit einem gegebenen Radius (R) einem optischen Wirkdurchmesser (D) welcher in etwa dem doppelten Radius (R) der zugrunde liegenden Kreisgrundfläche entspricht und mit einer Symmetrieachse (X) ausgebildet ist,
- **dass** mindestens ein Randstrahlenbündel (L2R) des sekundären Lichtstrahlenbündels (L2) benachbart zum Zentralstrahlenbünde (L2Z) des sekundären Lichtstrahlenbündels (L2) unmittelbar am Rand oder Mantel des durchstrahlten Zylinderabschnittbereichs (ZA) der Zylinderlinse (Z) vorbei aussendbar ist,
- **dass** das Zentralstrahlenbündel (L2Z) des sekundären Lichtstrahlenbündels (L2) durch Wechselwirkung mit der Zylinderlinse (Z) zerstreubar und als Teil (L3Z) des tertiären Lichtstrahlenbündels (L3) als Linienmarkenstrahlenbündel (LML) für eine Lichtmarke (ML) im Wesentlichen in Form einer Linie projizierbar ist und
- **dass** das mindestens eine Randstrahlenbündel (L2R) des sekundären Lichtstrahlenbündels (L2) als Teil (L3R) des tertiären Lichtstrahlenbündels (L3) als Punktmarkenbündel (LMP) für eine Lichtmarke (MP) im Wesentlichen in Form eines Punkts oder eines Flecks projizierbar ist.

2. Vorrichtung nach Anspruch 1,
**dadurch gekennzeichnet,**
**dass** die Lichtquelleneinrichtung (Q) zur Erzeugung und Aussendung im Wesentlichen kohärenten und/oder monochromatischen Lichts für das primäre Lichtstrahlenbündel (L1) ausgelegt ist.

3. Vorrichtung nach einem der vorangehenden Ansprüche,
**dadurch gekennzeichnet,**
**dass** die Lichtquelleneinrichtung (Q) eine Laserlichtquelle aufweist oder von einer solchen gebildet wird.

4. Vorrichtung nach einem der vorangehenden Ansprüche,
**dadurch gekennzeichnet,**
**dass** die Lichtquelleneinrichtung (Q) eine Laserdiode oder eine Anordnung einer Mehrzahl Laserdioden aufweist oder von einer solchen gebildet wird.

5. Vorrichtung nach einem der vorangehenden Ansprüche,
**dadurch gekennzeichnet,**
**dass** zur Strahlformung bezüglich des sekundären Lichtstrahlenbündels (L2) zwischen der Kollimationsoptik (K) und der Projektionsoptik (P) eine Blendeneinrichtung (B) vorgesehen ist.

6. Vorrichtung nach Anspruch 5,
**dadurch gekennzeichnet,**
**dass** die Blendeneinrichtung (B) eine Kreisblende oder eine Rechteckblende aufweist oder von dieser gebildet wird, welche jeweils insbesondere im Wesentlichen konzentrisch zum Querschnitt des sekundären Lichtstrahlenbündels (L2) vorgesehen und angeordnet ist.

7. Vorrichtung nach einem der vorangehenden Ansprüche,
**dadurch gekennzeichnet,**
**dass** durch Wahl der Art und Geometrie der Lichtquelleneinrichtung (Q), der Kollimationsoptik (K) und/oder deren geometrischen und/oder Lagebezichung zueinander das sekundäre Lichtstrahlenbündel (L2) mit einem im Wesentlichen elliptischen Querschnitt ausbildbar ist, und zwar mit einer großen Halbachse (a) und einer kleinen Halbachse (b).

8. Vorrichtung nach Anspruch 7,
**dadurch gekennzeichnet,**
**dass** die große Halbachse (a) des Querschnitts des sekundären Lichtstrahlenbündels (L2) in etwa senkrecht zur Symmetricachse (X) der Zylinderlinse (Z) verlaufend gewählt und ausgebildet ist.

9. Vorrichtung nach Anspruch 8,
**dadurch gekennzeichnet,**
- **dass** die große Halbachse (a) des Querschnitts des sekundären Lichtstrahlenbündels (L2) in etwa dem 8-fachen Radius (R) der Zylinderlinse (Z) bzw. etwa dem 4-fachen optischen Wirkdurchmesser (D) der Zylinderlinse (Z) entspricht und/oder
- **dass** die kleine Halbachse (b) des Querschnitts des sekundären Lichtstrahlenbündels (L2) in etwa dem 2-fachen Radius (R) der Zylinderlinse (Z) bzw. dem 1-fachen Wirkdurchmesser der Zylinderlinse (Z) entspricht

10. Vorrichtung nach einem der Ansprüche 8 oder 9,
**dadurch gekennzeichnet,**
- **dass** eine Kreisblende (B) vorgesehen ist, deren Radius (Rkb) etwa iem 4-fachen Radius (R) der Zylinderlinse (Z) bzw. etwa dem 2-fachen optischen Wirkdurchmesser (D) der Zylinderlinse (Z) entspricht oder
- **dass** eine Rechteckblende (B) vorgesehen ist, mit einer ersten Kante (c) senkrecht zur Symmetrieachse (X) der Zylinderlinse (Z), welche etwa dem 3-fachen Radius (R) der Zylinderlinse (Z) bzw. etwa dem 1,5-fachen optischen Wirkdurchmesser der Zylinderlinse (Z) entspricht, und mit einer zweiten Kante (d parallel zur Symmetrieachse (X) der Zylinderlinse (Z), welche etwa dem 5-fachen Radius (R) der Zylinderlinse (Z) bzw. etwa dem 2,5-fachen optischen Wirkdurchmesser (D) der Zylinderlinse (Z) entspricht.

11. Vorrichtung nach Anspruch 10,
**dadurch gekennzeichnet,**
**dass** die große Halbachse (a) des Querschnitts des sekundären Lichtstrahlenbündels (L2) in etwa parallel zur Symmetrieachse (X) der Zylinderlinse (Z) verlaufend gewählt und ausgebildet ist.

12. Vorrichtung nach Anspruch 11,
**dadurch gekennzeichnet,**
- **dass** die große Halbachse (a) des Querschnitts des sekundären Lichtstrahlenbündels (L2) in etwa dem 12-fachen Radius (R) der Zylinderlinse (Z) bzw. etwa dem 6-fachen optischen Wirkdurchmesser (D) der Zylinderlinse (Z) entspricht und/oder
- **dass** die kleine Halbachse (b) des Querschnitts des sekundären Lichtstrahlenbündels (L2) in etwa dem 4-fachen Radius (R) der Zylinderlinse (Z) bzw. etwa dem 2-fachen Wirkdurchmesser (D) der Zylinderlinse (Z) entspricht.

13. Vorrichtung nach einem der Ansprüche 11 oder 12,
**dadurch gekennzeichnet,**
- **dass** eine Kreisblende (B) vorgesehen ist, deren Radius (Rkb) etwa iem 4-fachen oder 6-fachen Radius (R) der Zylinderlinse (Z) bzw. etwa dem 2-fachen bzw. etwa dem 3-fachen optischen Wirkdurchmesser (D) der Zylinderlinse (Z) entspricht oder
- **dass** eine Rechteckblende (B) vorgesehen ist, mit einer ersten Kante (c) senkrecht zur Symmetrieachse (X) der Zylinderlinse (Z), welche etwa dem 3-flachen oder etwa dem 6-fachen Radius (R) der Zylinderlinse (Z) bzw. etwa dem 1,5-fachen oder etwa dem 3-fachen optischen Wirkdurchmesser (D) der Zylinderlinse (Z) entspricht, und mit einer zweiten Kante (d) parallel zur Symmetrieachse (X) der Zylinderlinse (Z), welche etwa dem 4-fachen Radius (R) der Zylinderlinse (Z) bzw. etwa dem 2-fachen optischen Wirkdurchmesser (D) der Zylinderlinse (Z) entspricht.

## Claims

1. Device for producing and projecting light marks,
with:
- a light source device (Q) which is designed and provided for production and emission of a primary light beam cluster (L1),
- a collimating lens (K) which is designed and provided for reception of the primary light beam cluster (L1) and for its collimation, parallelization and hence expansion to a secondary light beam cluster (L2) and for directional emission of the secondary light beam cluster (L2), and
- a projection lens (P) which is designed and provided for reception of at least a part (L22) of the secondary light beam cluster (L2) and for conversion of the secondary light beam cluster (L2) into at least one tertiary light beam cluster (L3) suitable for at least one light mark (ML, MP) or marker beam cluster (LM) and its emission and hence projection of at least one light mark (ML, MP),
- in which the projection lens (P) has a cylindrical lens (Z),
**characterised in that**
- the secondary light beam cluster (L2) or a part thereof (L2Z) may be applied to the projection lens (P) so that
- the cylindrical lens (Z), in the cylindrical section area (ZA) in which it is fully penetrable by a central beam cluster (L2Z) of the secondary light beam cluster (L2), is in the form of a regular cylinder with a given radius (R), an effective optical diameter (D) which corresponds to approximately twice the radius (R) of the underlying circular base and with an axis of symmetry (X).
- at least one edge beam cluster (L2R) of the secondary light beam cluster (L2) adjacent to the central beam cluster (L2Z) of the secondary light beam cluster (L2) can be emitted directly along the edge or shell of the penetrated cylindrical section area (ZA) past the cylindrical lens (Z).
- the central beam cluster (L2Z) of the secondary light beam cluster (L2) is diffusible by interaction with the cylindrical lens (Z) and is projectable as part (L3Z) of the tertiary light beam cluster (L3) essentially in the form of a line as a line mark beam cluster (LML) for a light mark (ML) and
- at least one edge beam cluster (L2R) of the secondary light beam cluster (L2) is projectable as part (L3R) of the tertiary light beam cluster (L3) essentially in the form of a dot or spot as a dot mark cluster (LMP) for a light mark (MP).

2. Device according to claim 1, **characterised in that** the light source device (Q) is designed for the production and emission of essentially coherent and/or monochromatic light for the primary light beam cluster (L1).

3. Device according to either of the preceding claims, **characterised in that** the light source device (Q) has a laser light source or is formed by said source.

4. Device according to any of the preceding claims, **characterised in that** the light source device (Q) has a laser diode or an arrangement of a plurality of laser diodes or is formed by said diode or arrangement.

5. Device according to any of the preceding claims, **characterised in that** an aperture device (B) is provided between the collimating lens (K) and the projection lens (P) for beam forming in relation to the secondary light beam cluster (L2).

6. Device according to claim 5, **characterised in that** the aperture device (B) has a circular aperture or a rectangular aperture or is formed by said aperture, which is particularly provided and arranged in each case basically concentrically to the cross-section of the secondary light beam cluster (L2).

7. Device according to any of the preceding claims, **characterised in that** by means of selection of the type and geometry of the light source device (Q), the collimating lens (K) and/or their geometric and/or positional relationship to one another, the secondary light beam cluster (L2) may be formed with a basically elliptical cross-section, namely with a large half-axis (a) and a small half-axis (b).

8. Device according to claim 7, **characterised in that** the large half-axis (a) of the cross-section of the secondary light beam cluster (L2) is selected and formed to run approximately perpendicular to the axis of symmetry (X) of the cylindrical lens (Z).

9. Device according to claim 8, **characterised in that**
- the large half-axis (a) of the cross-section of the secondary light beam cluster (L2) corresponds to approximately 8 times the radius (R) of the cylindrical lens (Z) or to approximately 4 times the effective optical diameter (D) of the cylindrical lens (Z) and/or
- the small half-axis (b) of the cross-section of the secondary light beam cluster (L2) corresponds to approximately twice the radius (R) of the cylindrical lens (Z) or to 1 times the effective diameter (D) of the cylindrical lens (Z).

10. Device according to either of the claims 8 or 9, **characterised in that**
- a circular aperture (B) is provided, the radius (Rkb) of which corresponds to approximately 4 times the radius (R) of the cylindrical lens (Z) or to approximately twice the effective optical diameter (D) of the cylindrical lens (Z) or
- a rectangular aperture (B) is provided, with a first edge (c) perpendicular to the axis of symmetry (X) of the cylindrical lens (Z) which corresponds to approximately 3 times the radius (R) of the cylindrical lens (Z) or to approximately 1.5 times the effective optical diameter of the cylindrical lens (Z), and with a second edge (d) parallel to the axis of symmetry (X) of the cylindrical lens (Z) which corresponds to approximately 5 times the radius (R) of the cylindrical lens (Z) or to approximately 2.5 times the effective optical diameter (D) of the cylindrical lens (Z).

11. Device according to claim 10, **characterised in that** the large half-axis (a) of the cross-section of the secondary light beam cluster (L2) is selected and formed to run approximately parallel to the axis of symmetry (X) of the cylindrical lens (Z).

12. Device according to claim 11, **characterised in that**
- the large half-axis (a) of the cross-section of the secondary light beam cluster (L2) corresponds to approximately 12 times the radius (R) of the cylindrical lens (Z) or to approximately 6 times the effective optical diameter (D) of the cylindrical lens (Z) and / or
- the small half-axis (b) of the cross-section of the secondary light beam cluster (L2) corresponds to approximately 4 times the radius (R) of the cylindrical lens (Z) or to approximately twice the effective diameter (D) of the cylindrical lens (Z).

13. Device according to either of claims 11 or 12, **characterised in that**
- a circular aperture (B) is provided, the radius (Rkb) of which corresponds to approximately 4 or 6 times the radius (R) of the cylindrical lens (Z) or to approximately twice or 3 times the effective optical diameter (D) of the cylindrical lens (Z) or
- a rectangular aperture (B) is provided, with a first edge (c) perpendicular to the axis of symmetry (X) of the cylindrical lens (Z) which corresponds to approximately 3 or 6 times the radius (R) of the cylindrical lens (Z) or to approximately 1.5 or 3 times the effective optical diameter of the cylindrical lens (Z), and with a second edge (d) parallel to the axis of symmetry (X) of the cylindrical lens (Z) which corresponds to approximately 4 times the radius (R) of the cylindrical lens (Z) or to approximately twice the effective optical diameter (D) of the cylindrical lens (Z).

## Revendications

1. Dispositif pour produire et projeter des marques lumineuses, comportant
- un dispositif à source lumineuse (Q), qui est réalisé et prévu pour générer et émettre un faisceau de rayons lumineux primaire (L1),
- une optique de collimation (K), qui est réalisée et prévue pour recevoir le faisceau de rayons lumineux (L1) primaire et pour la collimation, la parallélisation et, en l'occurrence, l'élargissement de celui-ci en un faisceau de rayons lumineux secondaire (L2), ainsi que pour l'émission ciblée du faisceau de rayons lumineux secondaire (L2), et
- une optique de projection (P), qui est réalisée et prévue pour recevoir au moins une partie (L2Z) du faisceau de rayons lumineux secondaire (L2) et pour transformer le faisceau de rayons lumineux secondaire (L2) en au moins un faisceau de rayons lumineux tertiaire (L3) ou faisceau de rayons de marquage (LM), approprié à au moins une marque lumineuse (ML, MP) et pour émettre ledit faisceau tertiaire et donc projeter au moins une marque lumineuse (ML, MP),
- sachant que l'optique de projection (P) comporte une lentille cylindrique (Z),
**caractérisé**
- **en ce que** l'optique de projection (P) peut recevoir le faisceau de rayons lumineux (L2) secondaire ou une partie (L2Z) de celui-ci,
- **en ce que** la lentille cylindrique (Z), dans la zone cylindrique (ZA), dans laquelle elle est totalement traversée par un faisceau de rayons central (L2Z) du faisceau de rayons lumineux secondaire (L2), est réalisée en forme de cylindre circulaire avec un rayon (R) donné, un diamètre actif optique (D), qui correspond sensiblement au double du rayon (R) de la surface de base circulaire servant de base, et avec un axe de symétrie (X),
- **en ce qu'**au moins un faisceau de rayons latéral (L2R) du faisceau de rayons lumineux secondaire (L2), adjacent au faisceau de rayons central (L2Z) du faisceau de rayons lumineux secondaire (L2), peut être émis directement le long du bord ou de l'enveloppe de la zone cylindrique (ZA), traversée par les rayons, de la lentille cylindrique (Z),
- **en ce que** le faisceau de rayons central (L2Z) du faisceau de rayons lumineux secondaire (L2) peut être dispersé par interaction avec la lentille cylindrique (Z) et peut être projeté sensiblement sous la forme d'une ligne en tant que partie (L3Z) du faisceau de rayons lumineux tertiaire (L3) sous forme de faisceau de rayons pour marques lumineuses (LML) pour une marque lumineuse (ML), et
- **en ce que** ledit au moins un faisceau de rayons latéral (L2R) du faisceau de rayons lumineux secondaire (L2) peut être projeté sous la forme d'un point ou d'une tache en tant que partie (L3R) du faisceau de rayons lumineux tertiaire (L3) sous la forme d'un faisceau de marques ponctuelles (LMP) pour une marque lumineuse (MP).

2. Dispositif selon la revendication 1, **caractérisé en ce que** le dispositif à source lumineuse (Q) est configuré pour générer et émettre une lumière sensiblement cohérente et/ou monochromatique pour le faisceau de rayons lumineux primaire (L1).

3. Dispositif selon l'une quelconque des revendications précédentes, **caractérisé en ce que** le dispositif à source lumineuse (Q) comporte une source lumineuse à laser ou est formé par une telle source lumineuse.

4. Dispositif selon l'une quelconque des revendications précédentes, **caractérisé en ce que** le dispositif à source lumineuse (Q) comporte une diode laser ou un arrangement d'une pluralité de diodes laser ou est formé par une telle diode.

5. Dispositif selon l'une quelconque des revendications précédentes, **caractérisé en ce qu'**un dispositif à diaphragme (B) est prévu entre l'optique de collimation (K) et l'optique de projection (P) pour la formation des rayons par rapport au faisceau de rayons lumineux secondaire (L2).

6. Dispositif selon la revendication 5, **caractérisé en ce que** le dispositif à diaphragme (B) comporte un diaphragme circulaire ou un diaphragme rectangulaire ou est formé par celui-ci, lequel est prévu et disposé en particulier sensiblement concentriquement à la section du faisceau de rayons lumineux secondaire (L2).

7. Dispositif selon l'une quelconque des revendications précédentes, **caractérisé en ce que** par le choix du type et de la géométrie du dispositif à source lumineuse (Q), de l'optique de collimation (K) et/ou de leur rapport géométrique et/ou rapport de positionnement l'un par rapport à l'autre, le faisceau de rayons lumineux secondaire (L2) peut être réalisé avec une section sensiblement elliptique, à savoir avec un grand demi-axe (a) et un petit demi-axe (b).

8. Dispositif selon la revendication 7, **caractérisé en ce que** le grand demi-axe (a) de la section du faisceau de rayons lumineux secondaire (L2) est choisi et réalisé en étant orienté sensiblement perpendiculairement à l'axe de symétrie (X) de la lentille cylindrique (Z).

9. Dispositif selon la revendication 8, **caractérisé**
- **en ce que** le grand demi-axe (a) de la section du faisceau de rayons lumineux secondaire (L2) correspond sensiblement à 8 fois le rayon (R) de la lentille cylindrique (Z) ou sensiblement à 4 fois le diamètre actif optique (D) de la lentille cylindrique (Z), et/ou
- **en ce que** le petit demi-axe (b) de la section du faisceau de rayons lumineux secondaire (L2) correspond sensiblement à 2 fois le rayon (R) de la lentille cylindrique (Z) ou à 1 fois le diamètre actif de la lentille cylindrique (Z).

10. Dispositif selon la revendication 8 ou 9, **caractérisé**
- **en ce qu'**il est prévu un diaphragme circulaire (B), dont le rayon (Rkb) correspond sensiblement à 4 fois le rayon (R) de la lentille cylindrique (Z) ou sensiblement à 2 fois le diamètre actif optique (D) de la lentille cylindrique (Z), ou
- **en ce qu'**il est prévu un diaphragme rectangulaire (B), avec une première arête (c) perpendiculaire à l'axe de symétrie (X) de la lentille cylindrique (Z), laquelle correspond sensiblement à 3 fois le rayon (R) de la lentille cylindrique (Z) ou sensiblement à 1,5 fois le diamètre actif optique de la lentille cylindrique (Z), et avec une deuxième arête (d) parallèle à l'axe de symétrie (X) de la lentille cylindrique (Z), laquelle correspond sensiblement à 5 fois le rayon (R) de la lentille cylindrique (Z) ou sensiblement à 2,5 fois le diamètre actif optique (D) de la lentille cylindrique (Z).

11. Dispositif selon la revendication 10, **caractérisé en ce que** le grand demi-axe (a) de la section du faisceau de rayons lumineux secondaire (L2) est choisi et réalisé en étant orienté sensiblement parallèlement à l'axe de symétrie (X) de la lentille cylindrique (Z).

12. Dispositif selon la revendication 11, **caractérisé**
- **en ce que** le grand demi-axe (a) de la section du faisceau de rayons lumineux secondaire (L2) correspond sensiblement à 12 fois le rayon (R) de la lentille cylindrique (Z) ou sensiblement à 6 fois le diamètre actif optique (D) de la lentille cylindrique (Z), et/ou
- **en ce que** le petit demi-axe (b) de la section du faisceau de rayons lumineux secondaire (L2) correspond sensiblement à 4 fois le rayon (R) de la lentille cylindrique (Z) ou sensiblement à 2 fois le diamètre actif (D) de la lentille cylindrique (Z).

13. Dispositif selon la revendication 11 ou 12, **caractérisé**
- **en ce qu'**il est prévu un diaphragme circulaire (B), dont le rayon (Rkb) correspond sensiblement à 4 fois ou 6 fois le rayon (R) de la lentille cylindrique (Z) ou sensiblement à 2 fois ou 3 fois le diamètre actif optique (D) de la lentille cylindrique (Z), ou
- **en ce qu'**il est prévu un diaphragme rectangulaire (B), avec une première arête (c) perpendiculaire à l'axe de symétrie (X) de la lentille cylindrique (Z), laquelle correspond sensiblement à 3 fois ou sensiblement à 6 fois le rayon (R) de la lentille cylindrique (Z) ou sensiblement à 1,5 fois ou sensiblement à 3 fois le diamètre actif optique (D) de la lentille cylindrique (Z) , et avec une deuxième arête (d) parallèle à l'axe de symétrie (X) de la lentille cylindrique (Z), laquelle correspond sensiblement à 4 fois le rayon (R) de la lentille cylindrique (Z) ou sensiblement à 2 fois le diamètre actif optique (D) de la lentille cylindrique (Z) .
